(19) Europäisches Patentamt
European Patent Office
Office européen des brevets

(11) **EP 3 991 813 A1**

(12) **EUROPEAN PATENT APPLICATION**

(43) Date of publication:
04.05.2022 Bulletin 2022/18

(21) Application number: 21199866.1

(22) Date of filing: 29.09.2021

(51) International Patent Classification (IPC):
**A63B 37/00** (2006.01)　　　**A63B 43/00** (2006.01)

(52) Cooperative Patent Classification (CPC):
A63B 37/0075; A63B 37/00223; A63B 37/00373;
A63B 37/00495; A63B 37/0076; A63B 43/008

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 30.10.2020 JP 2020182743

(71) Applicant: **Sumitomo Rubber Industries, Ltd.
Kobe-shi, Hyogo 651-0072 (JP)**

(72) Inventors:
• **INOUE, Hidetaka
Kobe-shi,, 651-0072 (JP)**
• **KAMINO, Kazuya
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **GOLF BALL**

(57)　An object of the present invention is to provide a golf ball having high visibility and excellent orientation at shot. The present invention provides a golf ball comprising a core, at least one intermediate layer covering the core, and a cover covering the intermediate layer, wherein the golf ball surface has a first region with a first color and a second region with a second color, and when a color difference between a surface of an outermost layer of the intermediate layer and the first region of the golf ball surface is represented by ΔEms1, and a color difference between the surface of the outermost layer of the intermediate layer and the second region of the golf ball surface is represented by ΔEms2, ΔEms2/ΔEms1≥4.0 and ΔEms1≤20 are satisfied.

Fig. 1

EP 3 991 813 A1

**Description**

**FIELD OF THE INVENTION**

The present invention relates to a golf ball, and particularly relates to a colored golf ball.

**DESCRIPTION OF THE RELATED ART**

Conventionally, a golf ball is white. In case of bad weather conditions such as rainy, cloudy, foggy and dim conditions, it is difficult to follow the trajectory of the white golf ball and visually recognize where the golf ball falls. In addition, in a case that the white golf ball lies on dead grass, it is difficult to find the golf ball even if the golf ball is nearby. In addition, recently, golf players desiring a fashionable golf ball are also increasing. Under such circumstances, a colored golf ball has been proposed in order to satisfy the requirements such as the fashionable appearance and the visibility under bad weather conditions.

JP S63-38476 A discloses a method for producing a golf ball, comprising covering a first hemispherical shell and a core charged into a hemispherical concave portion of a lower mold having the hemispherical concave portion with a second hemispherical shell with a different color from the first hemispherical shell to form a sphere, covering an upper mold on the sphere, and heating and pressing the same to form a colored golf ball with two tones, wherein a protrusion for being horizontally locked to an edge of the concave portion of the lower mold is formed in the vicinity of an edge face of an opening of the first hemispherical shell.

JP 2013-183833 A discloses a golf ball comprising a core and a cover, wherein the cover consists of a first hemisphere and a second hemisphere, and the first hemisphere has a different style from the second hemisphere. JP 2013-183833 A further discloses the first hemisphere is formed from a first resin composition, the second hemisphere is formed from a second resin composition, and the first resin composition may have a different composition from the second resin composition.

JP 2017-118950 A discloses a golf ball comprising a core composed of at least one layer and a cover composed of at least one layer, wherein an outermost layer of the core has two hemispheres with color tones different from each other and formed from a rubber composition, a boundary between the hemispheres as a colored boundary line is formed along a great circle of the outermost layer of the core, at least one of the hemispheres contains a fluorescent coloring agent or a luminous agent, the cover is formed from a transparent or translucent thermoplastic resin composition, and at least one layer of the cover contains at least one of a fluorescent brightener, a fluorescent coloring agent, and a luminous agent.

JP S59-64165 U discloses a golf ball having a shell layer formed by covering a surface of a core with a plurality of shells with different colors, wherein an outer surface of the golf ball is comparted by the difference in the color of the shell layer.

U.S. Pat. No. 7862760 discloses a golf ball comprising a multi-color layer obtained by injection molding a first material and a second material respectively.

U.S. Pat. No. 8915802 discloses a golf ball comprising at least two layers, wherein each layer has at least two different color regions by which the golf ball shows an overall multi-color appearance.

U.S. Pat. No. 9067105 discloses a golf ball comprising a first hemispherical cover and a second hemispherical cover having color tones different from each other.

**SUMMARY OF THE INVENTION**

An object of the present invention is to provide a golf ball having high visibility and excellent orientation at shot.

The present invention that has solved the above problem provides a golf ball comprising a core, at least one intermediate layer covering the core, and a cover covering the intermediate layer, wherein the golf ball surface has a first region with a first color and a second region with a second color, and when a color difference between a surface of an outermost layer of the intermediate layer and the first region of the golf ball surface is represented by $\Delta Ems1$, and a color difference between the surface of the outermost layer of the intermediate layer and the second region of the golf ball surface is represented by $\Delta Ems2$, $\Delta Ems2/\Delta Ems1 \geq 4.0$ and $\Delta Ems1 \leq 20$ are satisfied.

The present invention is characterized in that a first region with a color tone similar to the color tone of the intermediate layer, and a second region with a color tone different from the color tone of the intermediate layer are formed on golf ball surface. The first region of the golf ball surface enhances the color development of the golf ball surface. In addition, since the second region of the golf ball surface has a color tone greatly different from the intermediate layer, the appearance of the golf ball becomes conspicuous. As the result of these interactions, the overall golf ball has enhanced visibility. In addition, since the regions with different color tones are formed on the golf ball surface, the golf ball has excellent orientation at shot.

According to the present invention, a golf ball having high visibility and excellent orientation at shot is obtained.

**BRIEF DESCRIPTION OF THE DRAWINGS**

Fig. 1 is a front view illustrating a golf ball according to one embodiment of the present invention;
Fig. 2 is a plan view illustrating a golf ball according to one embodiment of the present invention;
Fig. 3 is a front view illustrating a golf ball according to one embodiment of the present invention;
Fig. 4 is a plan view illustrating a golf ball according to one embodiment of the present invention; and
Fig. 5 is a partially cutaway cross-sectional view of a golf ball according to one embodiment of the present invention.

**DESCRIPTION OF THE PREFERRED EMBODIMENT**

The present invention provides a golf ball comprising a core, at least one intermediate layer covering the core, and a cover covering the intermediate layer, wherein the golf ball surface has a first region with a first color and a second region with a second color, and when a color difference between a surface of an outermost layer of the intermediate layer and the first region of the golf ball surface is represented by $\Delta Ems1$, and a color difference between the surface of the outermost layer of the intermediate layer and the second region of the golf ball surface is represented by $\Delta Ems2$, $\Delta Ems2/\Delta Ems1 \geq 4.0$ and $\Delta Ems1 \leq 20$ are satisfied.

The surface of the golf ball according to the present invention has a first region with a first color, and a second region with a second color which is different from the first color. The first region and the second region are each preferably a region with a single color.

The first color of the first region is not particularly limited, but the first color is preferably a color selected from the group consisting of white, yellow, orange, blue, red, pink, green and black. The second color of the second region is not particularly limited, as long as the second color is different from the first color of the first region, but the second color is preferably a color selected from the group consisting of white, yellow, orange, blue, red, pink, green and black.

The area of the first region on the golf ball surface is preferably 10% or more, more preferably 20% or more, and even more preferably 30% or more, and is preferably 90% or less, more preferably 80% or less, and even more preferably 70% or less, of the golf ball surface area.

The area of the second region on the golf ball surface is preferably 10% or more, more preferably 20% or more, and even more preferably 30% or more, and is preferably 90% or less, more preferably 80% or less, and even more preferably 70% or less, of the golf ball surface area.

The area ratio of the first region to the second region is not particularly limited, but the area ratio is preferably 20/80 or more, more preferably 30/70 or more, and even more preferably 50/50 or more, and is preferably 80/20 or less, more preferably 70/30 or less.

The shape of the first region and the second region is not particularly limited, and examples thereof include a polygonal shape such as a triangular shape, a quadrangular shape, a pentagonal shape and a hexagonal shape; a trapezoidal shape; a circle shape; and an elliptical shape, in a plan view. It is noted that a string of letters such as a trade name and a ball number usually formed on the golf ball surface is not qualified as the first region and the second region in the present invention.

The first region and the second region may be each formed only at one spot of the golf ball surface, or at a plurality of spots of the golf ball surface.

In the present invention, in the case that the golf ball surface consists of the first region and the second region, for example, when the first region has a specific shape, the second region is a region other than the first region. For example, if the first region has a polygonal shape such as a triangular shape, a quadrangular shape, a pentagonal shape and a hexagonal shape, a trapezoidal shape, a circle shape, or an elliptical shape in a plan view, the second region is a region on the golf ball surface other the first region.

In addition, in a preferable embodiment according to the present invention, the first region and the second region are each a region surrounded by two boundary lines connecting the first pole and the second pole of the golf ball surface wherein the region continues from the first pole to the second pole. Herein, the first pole and the second pole are each an intersection point of the golf ball surface with the central axis passing through the center point of the golf ball. The first region and the second region are each preferably hemispherical.

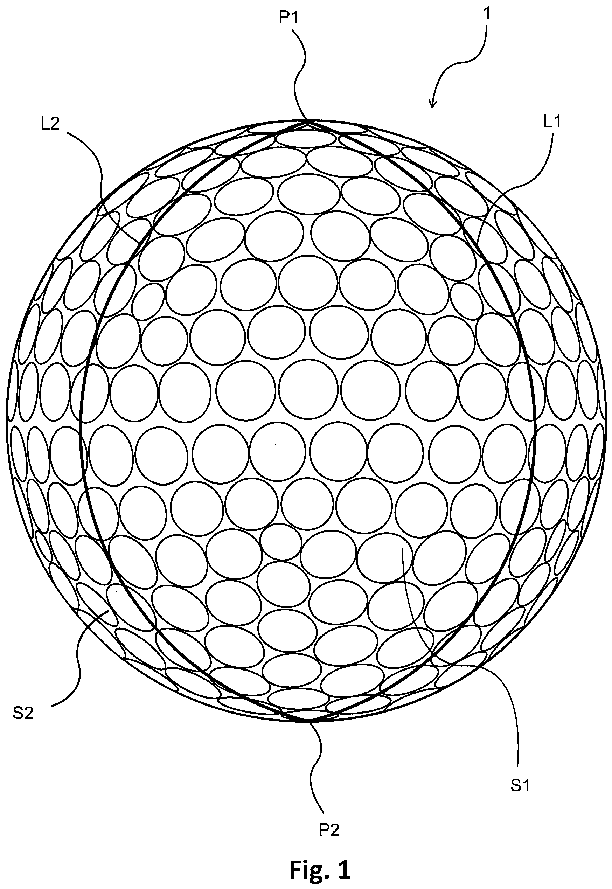

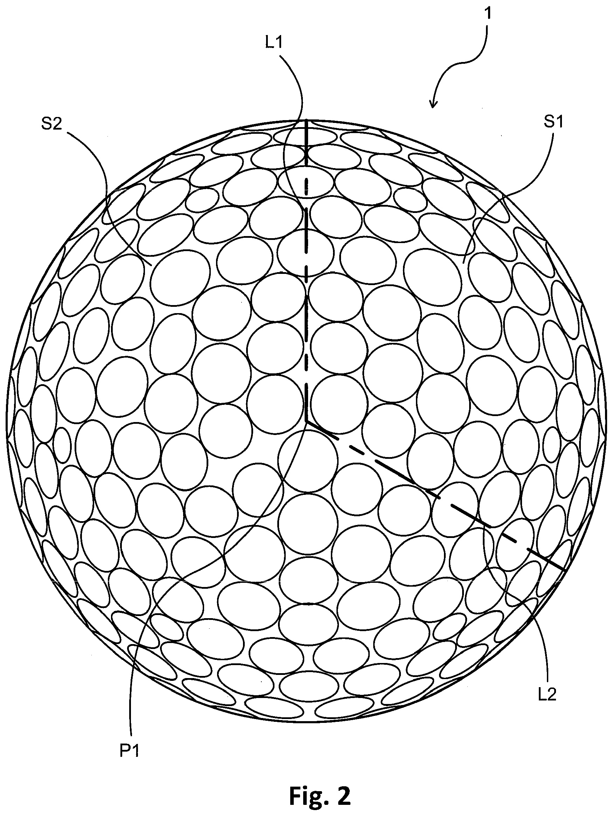

Fig. 1 is an illustrative figure illustrating a preferable embodiment of the first region and the second region of the present invention. The golf ball 1 has a first pole P1 and a second pole P2 where the axis passing through the center point of the golf ball intersects with the golf ball surface. Fig. 1 is a front view in which the first pole P1 and the second pole P2 are disposed in the up-down direction, and the first region is disposed at the front. Fig. 2 is a plan view observed from the first pole P1. The first region S1 and the second region S2 are each a region surrounded by two boundary lines L1 and L2 connecting the first pole P1 and the second pole P2 of the golf ball surface wherein the region continues from the first pole to the second pole. In the embodiment of Fig. 1 and Fig. 2, the first region S1 is a region occupying one third of the golf ball surface, and the second region S2 is a region occupying two third of the golf ball surface.

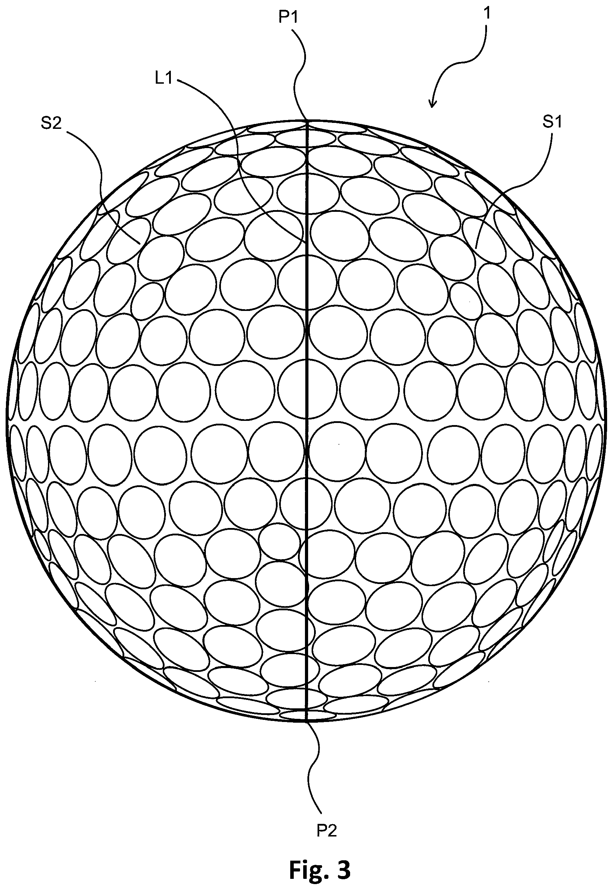

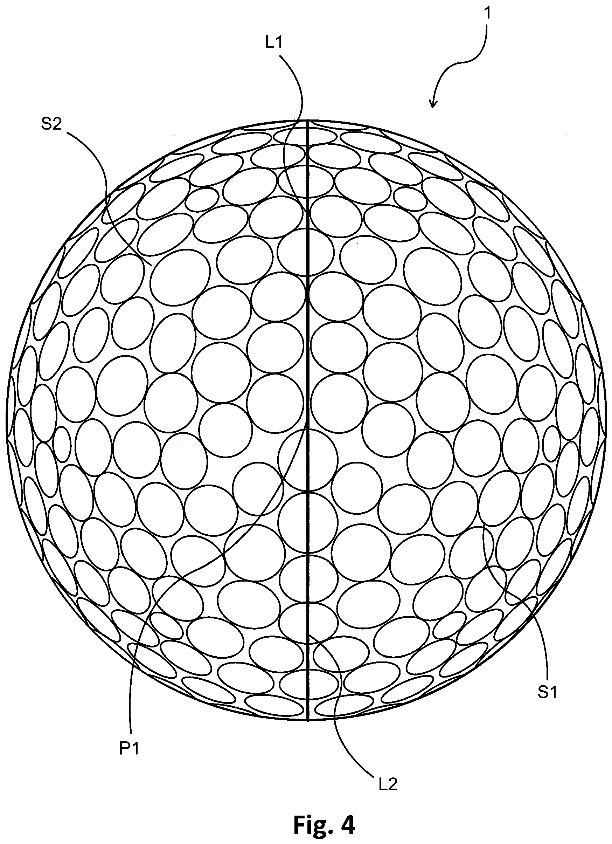

Fig. 3 is an illustrative figure illustrating another preferable embodiment of the first region and the second region of the present invention. Fig. 3 is a front view in which the first pole P1 and the second pole P2 are disposed in the up-down direction, and the boundary line L1 between the first region S1 and the second region S2 is disposed at the front. Fig. 4 is a plan view observed from the first pole P1. The above golf ball surface consists of the first region S1 and the second region S2, and the first region S1 and the second region S2 are each hemispherical.

The first region and the second region may be each formed by the colored paint film, or may be each formed by the colored cover. Examples thereof include an embodiment that the first region and the second region are formed by the colored cover; an embodiment that the first region and the second region are formed by the colored paint film; and an embodiment that either one of the first region and the second region is formed by the colored cover, and the other one of the first region and the second region is formed by the colored paint film.

The golf ball according to the present invention preferably has at least one intermediate layer, and the surface of the outermost layer of the intermediate layer has a third color. The third color may be same as or different from the first color of the first region. In addition, the third color is different from the second color of the second region.

In the golf ball according to the present invention, when the color difference between the surface of the outermost layer of the intermediate layer and the first region of the golf ball surface is represented by ΔEms1 and the color difference between the surface of the outermost layer of the intermediate layer and the second region of the golf ball surface is represented by ΔEms2 in CIELAB color coordinate system, ΔEms2/ΔEms1 is preferably 4.0 or more, more preferably 5.0 or more, and even more preferably 6.0 or more, and is preferably 20.0 or less, more preferably 18.0 or less, and even more preferably 15.0 or less. If the ΔEms2/ΔEms1 falls within the above range, the two regions are easily distinguished, and the color development can also be maintained.

In the golf ball according to the present invention, the color difference ΔEms1 between the surface of the outermost layer of the intermediate layer and the first region of the golf ball surface is preferably 20 or less, more preferably 18 or less, and even more preferably 15 or less in CIELAB color coordinate system. The ΔEms1 is preferably 0 or more, more preferably 2 or more, and even more preferably 4 or more. If the ΔEms1 falls within the above range, the golf ball has an appearance with better color development and inconspicuous dimple contour.

In the golf ball according to the present invention, the color difference ΔEms2 between the surface of the outermost layer of the intermediate layer and the second region of the golf ball surface is preferably 30 or more, more preferably 40 or more, and even more preferably 60 or more, and is preferably 160 or less, more preferably 140 or less, and even more preferably 120 or less in CIELAB color coordinate system. If the ΔEms2 falls within the above range, the golf ball has an appearance which is unlikely affected by the color shade of the intermediate layer. Also, the color shade of the cover is easily recognized.

In a more preferable embodiment according to the present invention, when the color difference between the first region of the golf ball surface and the second region of the golf ball surface is represented by ΔEs1s2, the ΔEs1s2 is preferably 50 or more, more preferably 60 or more, and even more preferably 70 or more, and is preferably 180 or less, more preferably 160 or less, and even more preferably 140 or less. If the ΔEs1s2 falls within the above range, the two regions are easily distinguishable, and the color shade of the two regions is easily recognized.

In the present invention, the color of the golf ball surface and the outermost layer of the intermediate layer can be determined by L* value, a* value and b* value in CIELAB color coordinate system. L* value, a* value and b* value in CIELAB color coordinate system can be measured according to JIS-Z-8701 or JIS-Z-8728. In the measurement, suitably used is a color difference meter CR-221 available from Minolta Co., in which a tristimulus values direct measuring method is adopted. Tristimulus values X, Y and Z are converted into L* a* and b* as follows.

$$L^{*}=116(Y/YN)^{1/3}-16$$

$$a^{*}=500[(X/XN)^{1/3}-(Y/YN)^{1/3}]$$

$$b^{*}=200[(Y/YN)^{1/3}-(Z/ZN)^{1/3}]$$

XN, YN and ZN are tristimulus values in the XYZ coordinate system of a perfect diffuse reflection surface.

The L* value is an index of brightness. A larger L* value indicates a brighter color. The a* value and the b* value are indexes of hue. The color varies toward red as the a* value is increasing, and the color varies toward green as the a* value is decreasing. In addition, the color varies toward yellow as the b* value is increasing, and the color varies toward blue as the b* value is decreasing.

In the case that the a* value is less than -20, the golf ball has, for example, a greenish or yellow greenish color, and in the case that the a* value is more than 30, the golf ball has, for example, a reddish, orangish or pinkish color. In the case that the golf ball has a pinkish color, the b* value easily exceeds 10. Further, in the case that the golf ball has a yellowish, yellow greenish or orangish color, the b* value easily exceeds 30.

It is noted that the color difference $\Delta E^*$ between two colors is defined as below.

$$\Delta E^* = [(\Delta L^*)^2 + (\Delta a^*)^2 + (\Delta b^*)^2]^{1/2}$$

[Golf ball material]

The golf ball according to the present invention comprises a core, at least one intermediate layer covering the core, and a cover covering the intermediate layer. Next, materials constituting each constituent element of the golf ball will be explained.

[Intermediate layer and cover]

The intermediate layer and cover of the golf ball according to the present invention is formed from a composition containing a resin component. It is noted that in the present invention, the resin composition for forming the intermediate layer is sometimes referred to as the intermediate layer composition, and the resin composition for forming the cover is sometimes referred to as the cover composition. Examples of the resin component include an ionomer resin, a thermoplastic polyurethane elastomer having a trade name of "Elastollan (registered trademark)" available from BASF Japan Ltd., a thermoplastic polyamide elastomer having a trade name of "Pebax (registered trademark)" available from Arkema K. K., a thermoplastic polyester elastomer having a trade name of "Hytrel (registered trademark)" available from Du Pont-Toray Co. Ltd., and a thermoplastic styrene elastomer having a trade name of "TEFABLOC (registered trademark)" available from Mitsubishi Chemical Corporation.

Examples of the ionomer resin include a product obtained by neutralizing at least a part of carboxyl groups of a binary copolymer composed of an olefine and an $\alpha,\beta$-unsaturated carboxylic acid having 3 to 8 carbon atoms with a metal ion; a product obtained by neutralizing at least a part of carboxyl groups of a ternary copolymer composed of an olefine, an $\alpha,\beta$-unsaturated carboxylic acid having 3 to 8 carbon atoms and an $\alpha,\beta$-unsaturated carboxylic acid ester with a metal ion; and a mixture thereof. The olefine is preferably an olefine having 2 to 8 carbon atoms. Examples of the olefine include ethylene, propylene, butene, pentene, hexene, heptene and octene, and ethylene is particularly preferable. Examples of the $\alpha,\beta$-unsaturated carboxylic acid having 3 to 8 carbon atoms include acrylic acid, methacrylic acid, fumaric acid, maleic acid and crotonic acid, and acrylic acid or methacrylic acid is particularly preferable. In addition, as the $\alpha,\beta$-unsaturated carboxylic acid ester, methyl ester, ethyl ester, propyl ester, n-butyl ester, isobutyl ester or the like of acrylic acid, methacrylic acid, fumaric acid, maleic acid or the like can be used, and acrylic acid ester or methacrylic acid ester is particularly preferable. Among them, as the ionomer resin, a metal ion-neutralized product of an ethylene-(meth)acrylic acid binary copolymer, or a metal ion-neutralized product of an ethylene-(meth)acrylic acid-(meth)acrylic acid ester ternary copolymer is preferable.

The resin composition constituting the intermediate layer or cover of the golf ball according to the present invention preferably contains the thermoplastic polyurethane elastomer or ionomer resin as the resin component. In case of using the ionomer resin, the thermoplastic styrene elastomer is also preferably used in combination. The amount of the polyurethane or ionomer resin in the resin component of the resin composition is preferably 50 mass % or more, more preferably 60 mass % or more, and even more preferably 70 mass % or more.

In a preferable embodiment according to the present invention, the intermediate layer is formed from a composition containing the ionomer resin, and the cover is formed from a composition containing the thermoplastic urethane elastomer.

[Dye and/or pigment]

The intermediate layer and/or cover of the golf ball according to the present invention preferably contains a dye and/or a pigment, more preferably contains a fluorescent dye and/or a fluorescent pigment. The fluorescent dye may be organic or inorganic, and may be any commercially available fluorescent dye. Examples of the fluorescent dye include a thioxanthene derivative, a xanthene derivative, a perylene derivative, a perylene imide derivative, a coumarin derivative, a thioindigoid derivative, a naphthalimide derivative, and a methine derivative.

In a preferable embodiment, the melting point of the fluorescent dye and/or fluorescent pigment is preferably 180 °C or less, more preferably 175 °C or less, and even more preferably 170 °C or less, and is preferably 135 °C or more, more preferably 140 °C or more, and even more preferably 145 °C or more. If the melting point of the fluorescent dye and/or fluorescent pigment falls within the above range, mixing and dispersing the fluorescent dye and/or fluorescent pigment in the resin component can be conducted at a relatively low temperature. Since the color change due to a high temperature during processing is not likely to occur, the desired color tone can be easily obtained.

The fluorescent dye is not particularly limited, and specific examples thereof include a yellow fluorescent dye such as Lumogen F Orange™ 240 (available from BASF Ltd.); Lumogen F Yellow™ 083 (available from BASF Ltd.); Hostasol Yellow™ 3G (available from Hoechst-Celanese Corp.); Oraset Yellow™ 8GF (available from Ciba-Geigy Ltd.); Fluorol 088™ (available from BASF Ltd.); Thermoplast F Yellow™ 084 (available from BASF Ltd.); Golden Yellow™ D-304 (available from DayGlo Color Corp.); Mohawk Yellow™ D-299 (available from DayGlo Color Corp.); Potomac Yellow™ D-838 (available from DayGlo Color Corp.); and Polyfast Brilliant Red™ SB (available from Keystone Corp.).

Examples of the fluorescent pigment include a pigment having a fluorescent dye dispersed in a polymer material, and a pigment having a fluorescent dye formed into a particle shape. The fluorescent pigment is not particularly limited, and examples thereof include ZQ-11, ZQ-12, ZQ-13, ZQ-14, ZQ-15, ZQ-16, ZQ-17-N, ZQ-18, ZQ-19, ZQ-21, GPL-11, GPL-13, GPX-14, GPL-15, GPX-17, GPL-19 and GPL-21 available from DayGlo Color Corp., and FZ-2000 series, FZ-5000 series, FZ-6000 series, FZ-3040 series and FX-300 series available from Sinloihi Co., Ltd.

Examples of the polymer material in which the fluorescent dye is dispersed include a benzoguanamine resin, acrylic resin, and polyester resin.

In a preferable embodiment, the amount of the dye and/or pigment contained in the cover and at least one layer of the intermediate layer is preferably 0.5 part by mass or more, more preferably 0.6 part by mass or more, and even more preferably 0.7 part by mass or more, and is preferably 7 parts by mass or less, more preferably 6 parts by mass or less, even more preferably 5 parts by mass or less, and most preferably 4 parts by mass or less, with respect to 100 parts by mass of the resin component. If the amount is too large, the color of the golf ball is so deep that the golf ball has a dark color tone, and if the amount is too small, the desired color tone is not obtained.

Since the fluorescent dye and/or fluorescent pigment has low light stability, an ultraviolet absorber or light stabilizer is preferably used. The ultraviolet absorber or light stabilizer is not particularly limited, and may be any commercially available product. Examples of the ultraviolet absorber or light stabilizer include an ultraviolet absorber such as a salicylic acid derivative, a benzophenone derivative, a benzotriazole derivative, a cyanoacrylate derivative, a triazine derivative and a nickel complex; and a light stabilizer such as a hindered amine derivative.

Examples of the salicylic acid derivative ultraviolet absorber include phenyl salicylate, p-t-butylphenyl salicylate, and p-octylphenyl salicylate. Examples of the benzophenone derivative ultraviolet absorber include 2,4-dihydroxybenzophenone, 2-hydroxy-4-methoxybenzophenone, and 2-hydroxy-4-octyloxybenzophenone, 2,2-dihydroxy-4,4'-methoxybenzophenone. Examples of the benzotriazole derivative ultraviolet absorber include 2-(2'-hydroxy-5'-methylphenyl)benzotriazole, 2-(2'-hydroxy-5'-t-butylphenyl)benzotriazole, 2-(2'-hydroxy-3'-t-butyl-5'-methylphenyl)-5-chlorobenzotriazole, 2-[2-hydroxy-3,5-bis($\alpha,\alpha$'-dimethylbenzyl)phenyl]-2H-benzotriazole, and 2-(5-methyl-2-hydroxyphenyl)benzotriazole. Examples of the cyanoacrylate derivative ultraviolet absorber include 2-ethylhexyl-2-cyano-3,3'-diphenylacrylate, and ethyl-2-cyano-3,3'-diphenylacrylate. Examples of the triazine derivative ultraviolet absorber include 2-(4,6-diphenyl-1,3,5-triazine-2-yl)-5[(hexyl)oxy]-phenol, 2,4-bis(2-hydroxy-4-butyloxyphenyl)-6-(2,4-bis-butyloxyphenyl)-1,3,5-triazine, and 2-(4-{[2-hydroxy-3-(2'-ethyl)hexyl]oxy}-2-hydroxyphenyl)-4,6-bis(2,4-dimethylphenyl)-1,3,5-triazine. Specific examples include "Sumisoap 130" and "Sumisoap 140" (both of which are benzophenone-based ultraviolet absorber) available from Sumitomo Chemical Co., Ltd.; "TINUVIN 234", "TINUVIN 900", "TINUVIN 326" and "TINUVIN P" (all of which are benzotriazole-based ultraviolet absorber) available from Ciba Specialty Chemicals plc.; "Uvinul N-35" (cyanoacrylate-based ultraviolet absorber) available from BASF Ltd.; and "TINUVIN 1577", "TINUVIN 460" and "TINUVIN 405" (triazine-based ultraviolet absorber) available from Ciba Specialty Chemicals plc. These ultraviolet absorbers may be used solely, or two or more of them may be used in combination. It is noted that the ultraviolet absorber that can be used in the present invention is not limited to the above examples, and any conventional ultraviolet absorber can be used.

Examples of the light stabilizer such as the hindered amine derivative include bis(1,2,2,6,6-pentamethyl-4-piperidyl){[3,5-bis(1,1'-dimethylethyl)-4-hydroxyphenyl]methyl}butyl malonate, and 1-{2-[3-(3,5-di-t-butyl-4-hydroxyphenyl)propionyloxy]ethyl}-4-[3-(3,5-di-t-butyl-4-hydroxyphenyl)propionyloxy]-2,2,6,6-tetramethylpiperidine. Specific examples include "Sanol LS-2626" and "TINUVIN 144" available from Ciba Specialty Chemicals pic.

The amount of the ultraviolet absorber is preferably 0.02 part by mass or more, more preferably 0.04 part by mass or more, and is preferably 2 parts by mass or less, more preferably 1 part by mass or less, with respect to 100 parts by mass of the resin component of the intermediate layer or cover. If the amount of the ultraviolet absorber falls within the above range, the color change due to the exposure to sunlight can be effectively suppressed.

(Titanium oxide)

The intermediate layer and/or cover may contain titanium oxide. The combination of the fluorescent pigment with a small amount of titanium oxide can provide a translucent cover with a vivid color. Since titanium oxide provides high opacity, the amount of titanium oxide is preferably 0.001 part by mass or more, more preferably 0.002 part by mass or more, and even more preferably 0.005 part by mass or more, and is preferably 0.7 part by mass or less, more preferably 0.5 part by mass or less, and even more preferably 0.4 part by mass or less, with respect to 100 parts by mass of the resin component. If the amount of titanium oxide is 0.001 part by mass or more, a translucent cover with a vivid color is obtained, and if the amount of titanium oxide is more than 0.7 part by mass, the cover tends to be opaque.

In case of increasing the opacity of the intermediate layer and/or cover and increasing the degree of the white color, the amount of titanium oxide can be increased. In this case, the amount of titanium oxide is preferably more than 0.7 part by mass, more preferably 1 part by mass or more, and is preferably 10 parts by mass or less, more preferably 8 parts by mass or less, with respect to 100 parts by mass of the resin component constituting the intermediate layer and/or the cover. If the amount of titanium oxide is more than 0.7 part by mass, the intermediate layer and/or cover has enhanced opacity. In addition, if the amount of titanium oxide is more than 10 parts by mass, the obtained intermediate layer and/or cover may have lowered durability.

(Other components)

In addition to the above described components, the intermediate layer and/or cover may contain a mass adjusting agent such as zinc oxide, calcium carbonate and barium sulfate, a dispersant, an antioxidant, a fluorescent brightener, a lubricant, a light stabilizer, or the like, as long as they do not impair the performance of the intermediate layer and/or cover.

The golf ball according to the present invention preferably has a paint film covering the cover. In the case that the golf ball according to the present invention has the paint film, the color of the golf ball surface can be obtained by measuring the surface of the paint film formed on the golf ball surface. Examples of the paint film include a clear paint film that is colorless and transparent, a nontransparent colored paint film, and a matte paint film.

In the case that the golf ball has a clear paint film that is colorless and transparent, the first color of the first region and the second color of the second region on the golf ball surface reflect the color of the cover. In the case that the golf ball has a nontransparent colored paint film or a matte paint film, the color tone of the golf ball surface is affected by the paint film.

The nontransparent colored paint film preferably contains, for example, a resin component and the dye and/or pigment. The matte paint film preferably contains, for example, a resin component and a filler.

The resin component constituting the paint film is not particularly limited, an acrylic resin, epoxy resin, polyurethane, polyester, cellulose-based resin or the like can be used, and a two-component curing type polyurethane which will be described later is preferably used. If the two-component curing type polyurethane is used, the obtained paint film has further enhanced durability.

(Polyurethane)

Examples of the two-component curing type polyurethane include a two-component curing type urethane paint having a polyol composition as a base agent and a polyisocyanate composition as a curing agent.

(Polyol composition)

The polyol composition contains a polyol compound. Examples of the polyol compound include a compound having at least two hydroxy groups in the molecule. Examples of the polyol compound include a compound having a hydroxy group at a terminal of the molecule, and a compound having a hydroxy group at a position other than the terminal of the molecule. The polyol compound may be used solely, or two or more of the polyol compounds may be used in combination.

Examples of the compound having the hydroxy group at the terminal of the molecule include a low molecular weight polyol having a molecular weight less than 500, and a high molecular weight polyol having a number average molecular weight of 500 or more. Examples of the low molecular weight polyol include a diol such as ethylene glycol, diethylene glycol, triethylene glycol, 1,3-butanediol, 1,4-butanediol, neopentyl glycol, and 1,6-hexanediol; and a triol such as glycerin, trimethylolpropane, and hexanetriol. Examples of the high molecular weight polyol include a polyether polyol, a polyester polyol, a polycaprolactone polyol, a polycarbonate polyol, an urethane polyol, an acrylic polyol, and polyrotaxane. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-$\varepsilon$-caprolactone (PCL). Examples of the polycarbonate polyol include polyhexamethylene carbonate.

The base agent containing the polyol component preferably further contains the specific urethane polyol shown below. The urethane polyol is synthesized by a reaction between a polyisocyanate and a polyol. The polyisocyanate for use in synthesis of the urethane polyol is not particularly limited, as long as the polyisocyanate has at least two isocyanate groups, and examples thereof include an aromatic polyisocyanate such as 2,4-toluene diisocyanate, 2,6-toluene diisocyanate, a mixture of 2,4-toluene diisocyanate and 2,6-toluene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylenediisocyanate (TMXDI), and para-phenylene diisocyanate (PPDI); and an alicyclic polyisocyanate or aliphatic polyisocyanate such as 4,4'-dicyclohexylmethane diisocyanate ($H_{12}$MDI), hydrogenated xylylenediisocyanate ($H_6$XDI), hexamethylene diisocyanate (HDI), isophorone diisocyanate (IPDI), and norbornene diisocyanate (NBDI). These polyisocyanates may be used solely or as a mixture of at least two of them. Among them, from the viewpoint of weather resistance, the non-yellowing type polyisocyanate (TMXDI, XDI, HDI, $H_6$XDI, IPDI, $H_{12}$MDI, NBDI, etc) is preferably used.

The polyol for use in synthesis of the urethane polyol is not particularly limited, as long as the polyol has a plurality of hydroxy groups, and examples thereof include a low molecular weight polyol and a high molecular weight polyol. Examples of the low molecular weight polyol include a diol such as ethylene glycol, diethylene glycol, triethylene glycol, 1,3-butanediol, 1,4-butanediol, neopentyl glycol, and 1,6-hexanediol; and a triol such as glycerin, trimethylolpropane, and hexanetriol. Examples of the high molecular weight polyol include a polyether polyol such as polyoxyethylene glycol (PEG), polyoxypropylene glycol (PPG), and polyoxytetramethylene glycol (PTMG); a condensed polyester polyol such as polyethylene adipate (PEA), polybutylene adipate (PBA), and polyhexamethylene adipate (PHMA); a lactone polyester polyol such as poly-ε-caprolactone (PCL); a polycarbonate polyol such as polyhexamethylene carbonate; and an acrylic polyol. Among the above polyols, the polyol having a weight average molecular weight ranging from 50 to 2,000, particularly the polyol having a weight average molecular weight ranging from 100 to 1,000 is preferably used. These polyols may be used solely or as a mixture of at least two of them.

The urethane polyol is a polyol having a urethane bond formed by the reaction between the polyisocyanate and the polyol, and a hydroxy group at the terminal. Herein, the amount of the urethane bond in the urethane polyol preferably ranges from 0.1 mmol to 5 mmol in 1 g of the urethane polyol. The amount of the urethane bond is correlative with the rigidity of the formed paint film. If the amount of the urethane bond is less than 0.1 mmol/g, the concentration of the urethane in the formed paint film is low, and thus abrasion resistance may be insufficient. On the other hand, if the amount of the urethane bond is more than 5 mmol/g, the paint film is so hard that the paint film has lowered followablity to the deformation of the golf ball body, and a small crack may easily occur.

In addition, the weight average molecular weight of the urethane polyol is preferably 4,000 or more, more preferably 4,500 or more, and is preferably less than 10,000, more preferably 9,000 or less. If the weight average molecular weight of the urethane polyol is less than 4,000, the drying time is longer, and thus workability and productivity may be lowered. On the other hand, if the urethane polyol has a high molecular weight of 10,000 or more, the urethane polyol has a relatively low hydroxy value, the reacting amount after applied is small, and thus the adhesion of the paint film to the golf ball body may be lowered. In addition, if the weight average molecular weight is 9,000 or less, a dense paint film (or clear paint layer) having little lowering of adhesion can be formed even in a state of being wetted by water.

The hydroxy value of the urethane polyol is preferably 15 mgKOH/g or more, more preferably 25 mgKOH/g or more, and is preferably 130 mgKOH/g or less, more preferably 120 mgKOH/g or less. If the hydroxy value of the urethane polyol is less than 15 mgKOH/g, the amount of the urethane polyol reacting with the curing agent is insufficient, and thus the adhesion strength of the paint film to the ball body may be hardly obtained. On the other hand, if the hydroxy value of the urethane polyol is more than 130 mgKOH/g, the productivity may be lowered because the time for the reaction between the urethane polyol and the curing agent is longer and the drying time is longer, and a crack may easily occur at impact.

The above urethane polyol is obtained by a reaction between the polyol and the polyisocyanate which are raw materials under a condition that the molar amount of the hydroxy group included in the polyol component is excessive to the molar amount of the isocyanate group included in the polyisocyanate component. In the above reaction, a solvent, or a conventional catalyst (dibutyl tin dilaurate, etc.) used in a reaction for synthesizing a urethane can be used. It is noted that the amount of the urethane bond can be controlled by adjusting the molecular weight of the polyol which is the raw material, the mixing ratio of the polyol to the polyisocyanate, or the like.

The polyol component constituting the base agent is preferably the above specific urethane polyol itself. In other words, it is preferable that the base agent is essentially the above specific urethane polyol, but the base agent may contain a polyol having no urethane bond and compatible with the urethane polyol, in addition to the urethane polyol. In this case, the polyol having no urethane bond is not particularly limited, and the above described raw material polyol for synthesizing the urethane polyol can be used. In addition, in the case that the base agent contains the polyol having no urethane bond, the amount of the urethane polyol in the base agent is preferably 50 mass % or more, more preferably 80 mass % or more. If the amount of the urethane polyol in the base agent is less than 50 mass %, the amount of the urethane polyol is relatively small, and thus the drying time is long.

(Polyisocyanate composition)

Examples of the polyisocyanate component of the polyisocyanate composition include a compound having at least two isocyanate groups. Examples of the polyisocyanate include an aromatic polyisocyanate such as 2,4-toluene diisocyanate, 2,6-toluene diisocyanate, a mixture of 2,4-toluene diisocyanate and 2,6-toluene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylenediisocyanate (TMXDI), and para-phenylene diisocyanate (PPDI); an alicyclic polyisocyanate or aliphatic polyisocyanate such as 4,4'-dicyclohexylmethane diisocyanate ($H_{12}$MDI), hydrogenated xylylenediisocyanate ($H_6$XDI), hexamethylene diisocyanate (HDI), isophorone diisocyanate (IPDI), and norbornene diisocyanate (NBDI); and derivatives of these polyisocyanates. In the present invention, as the polyisocyanate, two or more of polyisocyanates may be used.

Examples of the polyisocyanate derivative include an adduct-modified product obtained by a reaction between a diisocyanate and a polyhydric alcohol; an isocyanurate-modified product of a diisocyanate; a biuret-modified product; and an allophanate-modified product. The polyisocyanate derivative from which a free diisocyanate has been removed is more preferable.

The amount of the dye and/or pigment contained in the colored paint film is preferably 0.5 part by mass or more, more preferably 0.6 part by mass or more, and even more preferably 0.7 part by mass or more, and is preferably 3 parts by mass or less, more preferably 2.5 parts by mass or less, even more preferably 2.2 parts by mass or less, and most preferably 2.0 parts by mass or less, with respect to 100 parts by mass of the resin component constituting the paint film. If the amount is too high, the color of the golf ball is so deep that the golf ball has a dark color tone, and if the amount is too small, the desired color tone is not obtained.

The nontransparent colored paint film may contain titanium oxide to enhance opacity. In this case, the amount of titanium oxide is preferably 0.5 part by mass or more, more preferably 1 part by mass or more, and is preferably 10 parts by mass or less, more preferably 8 parts by mass or less, with respect to 100 parts by mass of the resin component constituting the paint film. If the amount of titanium oxide is 0.5 part by mass or more, the paint film can be imparted with opacity. In addition, if the amount of titanium oxide is more than 10 parts by mass, the obtained paint film may have lowered durability.

The paint film of the golf ball according to the present invention preferably contains a filler. If the filler is contained, the appearance of the paint film may become matte.

As the filler, a filler conventionally used in a paint can be used. Examples of the filler include silica (e.g. fused silica, dry silica (fumed silica), and wet silica such as precipitated silica, silica gel and colloidal silica), diatomaceous earth, zeolite, perlite, mica, glass, wollastonite, potassium titanate, xonotlite, gypsum, aluminum borate, molybdenum disulfide, aramid, crystalline cellulose, alumina, carbon, metal particle, and metal oxide particle.

As the filler, a porous filler is also preferably used. The porous filler has many fine pores. The shape of the fine pores included in the porous filler is not particularly limited. The pore size of the fine pores included in the porous filler is not particularly limited, but the pore size thereof preferably ranges from 0.1 nm to 500 nm. The pore size of the fine pores included in the porous filler varies depending on the type of the porous filler. For example, zeolite has a pore size in a range from 0.1 nm to 2 nm, and diatomaceous earth has a pore size of about 300 nm.

Examples of the porous filler include diatomaceous earth, zeolite, and perlite. Diatom is a kind of plankton, dead bodies of diatom deposited on seabed or lake bed, and fossilized into Diatomaceous earth. Diatomaceous earth primarily contains silica and has many very fine pores in each particle thereof. Perlite is a porous material formed when water included in a glassy volcanic stone such as obsidian, pearlstone and pitchstone is evaporated by treating the glassy volcanic stone at a high temperature. Zeolite is a crystalline porous alumino-silicate. Examples of the structure of zeolite include type A, ferrierite, ZSM-5, mordenite, beta, type X and type Y. It is noted that zeolite also includes porous silicalite. The porous filler may be used solely, or two or more of them may be used in combination.

The volume average particle size of the filler is preferably 0.5 $\mu$m or more, more preferably 1.0 $\mu$m or more, and even more preferably 2.0 $\mu$m or more, and is preferably 30 $\mu$m or less, more preferably 20 $\mu$m or less, and even more preferably 15 $\mu$m or less. It is noted that the volume particle size distribution is measured by a laser diffraction method, and the particle size of 50% accumulation (D50) on the volume particle size distribution is deemed as the volume average particle size.

The amount of the filler in the paint film is preferably 3 parts by mass or more, more preferably 5 parts by mass or more, and even more preferably 8 parts by mass or more, and is preferably 200 parts by mass or less, more preferably 150 parts by mass or less, and even more preferably 120 parts by mass or less, with respect to 100 parts by mass of the resin component. If the amount of the filler is 3 parts by mass or more, the appearance is matte, and if the amount of the filler is 200 parts by mass or less, the appearance is better, and dirt adhesion can be lowered.

The paint film may further contain an additive that is conventionally contained in a golf ball paint, such as an ultraviolet absorber, antioxidant, light stabilizer, fluorescent brighter, and antiblocking agent. The ultraviolet absorber and light stabilizer exemplified as the components that can be added in the intermediate layer and/the cover can also be used in the paint film.

[Core]

The core of the golf ball according to the present invention can be formed from a conventional rubber composition (hereinafter sometimes referred to as "core rubber composition"). For example, the core can be molded by heat pressing a rubber composition containing a base rubber, a co-crosslinking agent and a crosslinking initiator.

As the base rubber, particularly preferred is a high-cis polybutadiene having a cis bond in an amount of 40 mass % or more, preferably 70 mass % or more, and more preferably 90 mass % or more in view of its superior resilience. As the co-crosslinking agent, an α,β-unsaturated carboxylic acid having 3 to 8 carbon atoms or a metal salt thereof is preferable, and a metal salt of acrylic acid or a metal salt of methacrylic acid is more preferable. As the metal constituting the metal salt, zinc, magnesium, calcium, aluminum or sodium is preferable, and zinc is more preferable. The amount of the co-crosslinking agent is preferably 20 parts by mass or more and 50 parts by mass or less with respect to 100 parts by mass of the base rubber. In a case that the α,β-unsaturated carboxylic acid having 3 to 8 carbon atoms is used as the co-crosslinking agent, a metal compound (e.g. magnesium oxide) is preferably added. As the crosslinking initiator, an organic peroxide is preferably used. Specific examples of the organic peroxide include dicumyl peroxide, 1,1-bis(t-butylperoxy)-3,3,5-trimethylcyclohexane, 2,5-dimethyl-2,5-di(t-butylperoxy) hexane, and di-t-butyl peroxide. Among them, dicumyl peroxide is preferably used. The amount of the crosslinking initiator is preferably 0.2 part by mass or more, more preferably 0.3 part by mass or more, and is preferably 5 parts by mass or less, more preferably 3 parts by mass or less, with respect to 100 parts by mass of the base rubber.

In addition, the core rubber composition may further contain an organic sulfur compound. As the organic sulfur compound, diphenyl disulfides, thiophenols, and thionaphthols are preferably used. The amount of the organic sulfur compound is preferably 0.1 part by mass or more, more preferably 0.3 part by mass or more, and is preferably 5.0 parts by mass or less, more preferably 3.0 parts by mass or less, with respect to 100 parts by mass of the base rubber. The core rubber composition may further contain a carboxylic acid and/or a salt thereof. As the carboxylic acid and/or the salt thereof, a carboxylic acid having 1 to 30 carbon atoms and/or a salt thereof is preferable. The carboxylic acid may be either an aliphatic carboxylic acid or an aromatic carboxylic acid (benzoic acid, etc.). The amount of the carboxylic acid and/or the salt thereof is preferably 1 part by mass or more and 40 parts by mass or less with respect to 100 parts by mass of the base rubber.

[Method for producing golf ball]

The core of the golf ball according to the present invention is molded, for example, by heat pressing the core rubber composition. The molding conditions for heat pressing the core rubber composition may be suitably determined depending on the rubber composition. Generally, the molding is carried out at a temperature in a range from 130 °C to 200 °C and a pressure in a range from 2.9 MPa to 11.8 MPa for 10 to 60 minutes. For example, it is preferable that the molding is carried out by heating the core rubber composition at a temperature ranging from 130 °C to 200 °C for 10 minutes to 60 minutes, or alternatively, by molding the core rubber composition in a two-step heating, i.e. heated at a temperature ranging from 130 °C to 150 °C for 20 minutes to 40 minutes and then heated at a temperature ranging from 160 °C to 180 °C for 5 minutes to 15 minutes.

The intermediate layer composition and the cover composition can be obtained, for example, by dry blending the resin component, dye and/or pigment, and optional additives. Further, the dry blended mixture may be extruded into a pellet form. In the dry blending, for example, a mixer capable of blending raw materials in a pellet form is preferably used, a tumbler type mixer is more preferably used. The extrusion can be carried out with a conventional extruder such as a single-screw extruder, a twin-screw extruder, and a twin-screw/single-screw extruder.

The method for molding the intermediate layer is not particularly limited, and examples thereof include a method of molding the intermediate layer composition into a hemispherical half shell in advance, covering the spherical core with two of the half shells, and compression molding the spherical core with two of the half shells; and a method of injection molding the intermediate layer composition onto the spherical core to cover the spherical core.

In case of injection molding the intermediate layer composition onto the spherical core to form the intermediate layer, it is preferred to use upper and lower molds, each having a hemispherical cavity. When molding the intermediate layer by the injection molding method, the hold pin is protruded to hold the spherical core, and the intermediate layer composition which has been heated and melted is charged and then cooled to form the intermediate layer.

When molding the intermediate layer by the compression molding method, the molding of the half shell may be performed by either a compression molding method or an injection molding method, and the compression molding method is preferable. Compression molding the intermediate layer composition into the half shell may be carried out, for example, under a pressure of 1 MPa or more and 20 MPa or less at a temperature of -20 °C or more and +70 °C or less relative to the flow beginning temperature of the intermediate layer composition. If the molding is carried out under the above conditions, the half shell having a uniform thickness can be formed. Examples of the method for molding the intermediate layer by using the half shell include a method of covering the spherical core with two of the half shells, and compression molding the spherical core with two of the half shells. Compression molding the half shells into the intermediate layer may be carried out, for example, under a pressure of 0.5 MPa or more and 25 MPa or less at a temperature of -20 °C or more and +70 °C or less relative to the flow beginning temperature of the intermediate layer composition. If the molding is carried out under the above conditions, the intermediate layer having a uniform thickness can be formed.

It is noted that the molding temperature means the highest temperature where the temperature at the surface of the concave portion of the lower mold reaches from closing the mold to opening the mold. In addition, the flow beginning temperature of the composition may be measured using the thermoplastic resin composition in a pellet form under the following conditions with "Flow Tester CFT-500" available from Shimadzu Corporation.

Measuring conditions: Plunger area: 1 cm$^2$, Die length: 1 mm, Die diameter: 1 mm, Load: 588.399 N, Starting temperature: 30 °C, and Temperature rising rate: 3 °C/min.

The method for molding the cover from the cover composition is not particularly limited, and examples thereof include a method of injection molding the cover composition directly onto the intermediate layer; and a method of molding the cover composition into hollow shells, covering the spherical body having the intermediate layer formed thereon with a plurality of the hollow shells and compression molding the spherical body with a plurality of the hollow shells (preferably a method of molding the cover composition into hollow half shells, covering the spherical body having the intermediate layer formed thereon with two of the half shells and compression molding the spherical body with two of the half shells). The golf ball body having the cover formed thereon is ejected from the mold, and as necessary, the golf ball body is preferably subjected to surface treatments such as deburring, cleaning, and sandblast. In addition, if desired, a mark may also be formed thereon.

In the present invention, the first region and the second region are formed on the golf ball surface, for example, by producing a hollow first shell with the first color and a hollow second shell with the second color, covering the spherical body having the intermediate layer formed thereon with the first shell and the second shell, and compression molding the spherical body with the first shell and the second shell. In addition, a hemispherical first region with the first color and the hemispherical second region with the second color can be formed on the golf ball surface by molding a hollow half shell with the first color and a hollow half shell with the second color, covering the spherical body having the intermediate layer formed thereon with two of the half shells, and compression molding the spherical body with two of the half shells.

Dimples are preferably formed on the cover of the golf ball according to the present invention. The total number of the dimples formed on the cover is preferably 200 or more and 500 or less. If the total number of the dimples is less than 200, the dimple effect is hardly obtained, and if the total number of the dimples exceeds 500, the dimple effect is hardly obtained because the size of the respective dimples is small. The shape (shape in a plan view) of the dimples includes, for example, but is not limited to, a circle; a polygonal shape such as a roughly triangular shape, a roughly quadrangular shape, a roughly pentagonal shape, and a roughly hexagonal shape; and other irregular shape. The shape of the dimples may be employed solely, or two or more of the shapes may be employed in combination.

The golf ball having the cover formed thereon is ejected from the mold, and as necessary, the golf ball is preferably subjected to surface treatments such as deburring, cleaning, and sandblast. In addition, if desired, a paint film or a mark may also be formed thereon.

The paint film of the golf ball according to the present invention can be formed by painting the paint on the surface of the golf ball body. The method of applying the paint is not particularly limited, a conventional method can be adopted, and examples thereof include a spray coating and electrostatic coating.

In the case that the first region with the first color or the second region with the second color is formed by the colored paint film, the paint film can be formed by applying the paint, for example, to the desired shape of the first region or the second region.

In case of spray coating a two-component curing type urethane paint as the paint, the polyisocyanate composition and the polyol composition are fed with respective pumps and continuously mixed with a line mixer located in the stream line just before the air gun, and the obtained mixture is air-sprayed. Alternatively, the polyol and the polyisocyanate are air-sprayed respectively with an air spray system provided with a device for controlling the mixing ratio thereof. The paint application may be conducted by spraying the paint one time or overspraying the paint multiple times.

The paint applied on the golf ball body is dried, for example, at a temperature in a range of from 30 °C to 70 °C for 1 hour to 24 hours, to form the paint film.

[Construction of golf ball]

The construction of the golf ball according to the present invention is not particularly limited, as long as the golf ball comprises a core, at least one intermediate layer covering the core, and a cover covering the intermediate layer. Examples of the construction of the golf ball include a three-piece golf ball composed of a spherical core, one intermediate layer covering the spherical core, and a cover covering the intermediate layer; and a multi-piece golf ball composed of a spherical core, at least two intermediate layers covering the spherical core, and a cover covering the intermediate layers.

In case of having a plurality of intermediate layers, the color tone of the outermost layer of the intermediate layers is measured.

The core of the golf ball according to the present invention is preferably spherical. The diameter of the spherical core is preferably 34.8 mm or more, more preferably 36.8 mm or more, and even more preferably 38.8 mm or more, and is preferably 42.2 mm or less, more preferably 41.8 mm or less, even more preferably 41.2 mm or less, and most preferably 40.8 mm or less. If the diameter of the spherical core is 34.8 mm or more, the cover is not too thick and thus the resilience is better. On the other hand, if the diameter of the spherical core is 42.2 mm or less, the cover is not too thin and thus the cover functions well.

The thickness of the intermediate layer is preferably 0.8 mm or more, more preferably 0.9 mm or more, and even more preferably 1.0 mm or more, and is preferably 2.2 mm or less, more preferably 2.0 mm or less, and even more preferably 1.8 mm or less. If the thickness of the intermediate layer is 0.8 mm or more, the intermediate layer is more easily molded, and if the thickness of the intermediate layer is 2.2 mm or less, the core has a relatively large diameter and thus the golf ball has enhanced resilience performance. In case of having a plurality of intermediate layers, the total thickness of the intermediate layers preferably falls within the above range.

The cover of the golf ball according to the present invention is preferably single layered. The thickness of the cover is preferably 0.3 mm or more, more preferably 0.4 mm or more, and even more preferably 0.5 mm or more, and is preferably 2.0 mm or less, more preferably 1.5 mm or less, and even more preferably 1.0 mm or less. If the thickness of the cover is 0.3 mm or more, the cover is more easily molded, and if the thickness of the cover is 2.0 mm or less, the core has a relatively large diameter and thus the golf ball has enhanced resilience performance.

The thickness of the paint film is not particularly limited, and is preferably 5 $\mu$m or more, more preferably 7 $\mu$m or more, and is preferably 50 $\mu$m or less, more preferably 40 $\mu$m or less, and even more preferably 30 $\mu$m or less. If the thickness is less than 5 $\mu$m, the paint film tends to be easily worn off due to the continued use of the golf ball, and if the thickness exceeds 50 $\mu$m, the dimple effect may be lowered, and the flight performance of the golf ball tends to be lowered.

The golf ball according to the present invention preferably has a diameter in a range from 40 mm to 45 mm. In light of satisfying the regulation of US Golf Association (USGA), the diameter is preferably 42.67 mm or more. In light of prevention of air resistance, the diameter is preferably 44 mm or less, more preferably 42.80 mm or less. In addition, the golf ball preferably has a mass of 40 g or more and 50 g or less. In light of obtaining greater inertia, the mass is preferably 44 g or more, more preferably 45.00 g or more. In light of satisfying the regulation of USGA, the mass is particularly preferably 45.93 g or less.

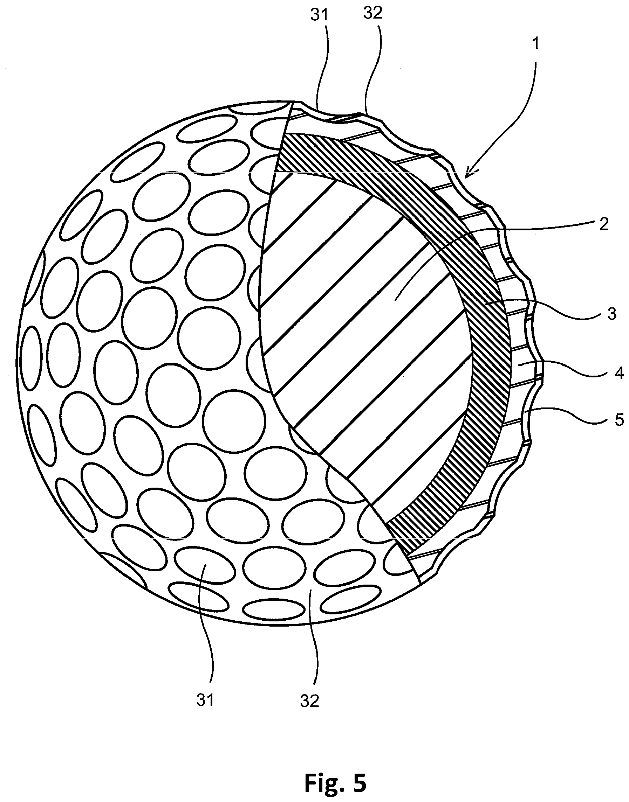

Fig. 5 is a partially cutaway cross-sectional view of a golf ball 1 according to one embodiment of the present invention. The golf ball 1 comprises a spherical core 2, an intermediate layer 3 covering the spherical core, and a cover 4 covering the intermediate layer. A plurality of dimples 31 are formed on the surface of the cover. Other portions than the dimples 31 on the golf ball surface are lands 32. The golf ball comprises a paint layer 5 on the outside of the cover.

**EXAMPLES**

Next, the present invention will be described in detail by way of examples. However, the present invention is not limited to the examples described below. Various changes and modifications without departing from the spirit of the present invention are included in the scope of the present invention.

[Evaluation method]

(1) Color tone

The color tone of the intermediate layer and the golf ball surface was measured with a color difference meter ("CM-3500d" available from KONICA MINOLTA, INC.). The color tone of the golf ball was measured in a state that the paint film was formed on the golf ball body.

(2) Easiness of finding a golf ball on the rough

The golf balls were sunk in the rough (length of grass: 5 cm to 10 cm) at a distance of 1 m to 10 m from the tester with an interval of 1m. The longest distance at which the tester correctly told the color combination of these balls was measured. Evaluation was conducted by twenty testers, and the average distance was calculated.

(3) Orientation at shot

The golf ball was placed such that the boundary between the hemispherical first region and the hemispherical second region faces the tester, and twenty testers were allowed to address the golf balls with a driver. The number of people who answered that he or she clearly recognized the orientation of the boundary line between the first hemisphere and the second hemisphere was accounted.

E (Excellent): 17 to 20
G (Good): 13 to 16
F (Fair): 9 to 12
P (Poor): 8 or less

[Production of golf ball]

(1) Production of core

The rubber composition having the formulation shown in Table 1 was kneaded with a kneading roll, and heat-pressed at a temperature of 170 °C for 20 minutes in upper and lower molds, each having a hemispherical cavity, to obtain a spherical core having a diameter of 39.7 mm. It is noted that the amount of barium sulfate was adjusted such that the obtained golf ball had a mass of 45.3 g.

Table 1

| Core composition | Parts by mass |
| --- | --- |
| Polybutadiene | 100 |
| Zinc acrylate | 25 |
| Zinc oxide | 5 |
| Barium sulfate | Appropriate amount [*1] |
| PBDS | 0.3 |
| Dicumyl peroxide | 0.8 |
| *1) Barium sulfate: the amount was adjusted such that the golf ball had a mass of 45.3 g. | |

The materials used in Table 1 are shown as follows.

Polybutadiene rubber: high-cis polybutadiene "BR730" (cis-1,4 bond amount = 95 mass %, 1,2-vinyl bond amount = 1.3 mass %, Moony viscosity ($ML_{1+4}$ (100 °C)) = 55, molecular weight distribution (Mw/Mn) = 3) available from JSR Corporation
Zinc acrylate: "ZNDA-90S" available from Nisshoku Techno Fine Chemical Co., Ltd.
Zinc oxide: "Ginrei R" available from Toho Zinc Co., Ltd.
Barium sulfate: "Barium sulfate BD" available from Sakai Chemical Industry Co., Ltd.
PBDS: bis(pentabromodiphenyl) disulfide available from Kawaguchi Chemical Industry Co., Ltd.
Dicumyl peroxide: "Percumyl (register trademark) D" available from NOF Corporation

(2) Formation of intermediate layer

According to the formulations shown in Table 2, the materials were mixed with a twin-screw kneading extruder to prepare the intermediate layer resin composition in a pellet form. The extruding conditions were a screw diameter of 45 mm, a screw rotational speed of 200 rpm, and a screw L/D = 35, and the mixture was heated to 160 °C to 230 °C at the die position of the extruder. The obtained intermediate layer resin composition was injection molded onto the spherical core obtained above to form the intermediate layer having a thickness of 1 mm.

Table 2

| Intermediate layer resin composition No. | 1 | 2 | 3 |
| --- | --- | --- | --- |
| Himilan 1605 | 50 | 50 | 50 |

(continued)

| Intermediate layer resin composition No. | 1 | 2 | 3 |
|---|---|---|---|
| Himilan AM7329 | 50 | 50 | 50 |
| FX-305 | - | 1 | - |
| GPX-17 | - | - | 1.5 |
| GPL-15 | - | 1 | 3 |
| Titanium oxide | 4 | 0.5 | 0.05 |
| Formulation: parts by mass | | | |

Himilan 1605: sodium ion-neutralized ethylene-methacrylic acid copolymer ionomer resin available from Du Pont-Mitsui Polychemicals Co., Ltd.
Himilan AM7329: zinc ion-neutralized ethylene-methacrylic acid copolymer ionomer resin available from Du Pont-Mitsui Polychemicals Co., Ltd.
Titanium oxide: "A-220" available from Ishihara Sangyo Kaisha, Ltd.
FX305: Lemon Yellow available from Sinloihi Co., Ltd.
GPX-17: Saturn yellow available from DayGlo Color Corp.
GPL-15: Blaze orange available from DayGlo Color Corp.

(3) Molding of cover

The materials shown in Table 3 were dry blended, and mixed with a twin-screw kneading extruder, to prepare the cover (half shell) compositions in a pellet form. The extruding conditions of the cover (half shell) compositions were a screw diameter of 45 mm, a screw rotational speed of 200 rpm, and screw L/D = 35, and the mixtures were heated to 150 °C to 230 °C at the die position of the extruder.

The compression molding of half shells was conducted as follows. The obtained cover resin composition in the pellet form was charged one by one into each of the depressed part of the lower mold of a half shell molding mold, and pressed to mold half shells. The compression molding was conducted under the following conditions: a molding temperature of 170 °C, a molding time of 5 minutes, and a molding pressure of 2.94 MPa. The spherical core having the intermediate layer formed thereon was concentrically covered with two half shells, i.e. half shell A and half shell B which had color tones different from each other, and compressed molded to form the cover. The compression molding was conducted under the following conditions: a molding temperature of 150 °C, a molding time of 2 minutes, and a molding pressure of 9.8 MPa. The cover has a thickness of 0.5 mm.

Table 3

| Cover (half shell) composition No. | 1 | 2 | 3 | 4 | 5 | 6 | 7 | 8 |
|---|---|---|---|---|---|---|---|---|
| Elastollan NY80A | 100 | 100 | 100 | 100 | 100 | 100 | 100 | 100 |
| FP-3000 | - | 2 | - | - | - | - | - | - |
| FX-305 | - | 1 | - | - | - | - | - | - |
| FX-327 | - | - | - | - | - | - | 1.5 | - |
| GPX-17 | - | - | 2 | - | - | - | - | - |
| GPL-15 | - | - | 4 | - | - | - | - | - |
| ZQ-14 | - | - | - | - | - | - | - | 0.015 |
| ZQ-17 | - | - | - | 0.2 | - | - | - | 5 |
| ZQ-18 | - | - | - | 3 | - | - | - | - |
| FP113 | - | - | - | - | 3 | - | - | - |
| FP1050 | - | - | - | - | - | 3 | - | - |
| JF-90 | 0.2 | 0.2 | 0.2 | 0.2 | 0.2 | 0.2 | 0.2 | 0.2 |

(continued)

| Cover (half shell) composition No. | 1 | 2 | 3 | 4 | 5 | 6 | 7 | 8 |
|---|---|---|---|---|---|---|---|---|
| Titanium oxide | 4 | 0.1 | 0.05 | 0.5 | 0.05 | 0.5 | 0.1 | 0.1 |
| Formulation: parts by mass | | | | | | | | |

The materials used in Table 3 are shown as follows.

Urethane resin: Elastollan (registered trademark) NY80A: polyurethane elastomer (polyol component: polytetramethylene ether glycol, polyisocyanate component: dicyclohexylmethane-4,4'-diisocyanate, chain extender: 1,4-butanediol) (Shore A hardness: 80) available from BASF Japan Ltd.
JF-90: light stabilizer available from Johoku Chemical Co. Ltd.
Titanium oxide: "A220" available from Ishihara Sangyo Kaisha, Ltd.
EPO Color FP3000: fluorescent pigment having fluorescent dye dispersed and fixed in benzoguanamine resin (condensation product of benzoguanamine and formaldehyde) available from Ukseung Chemical Co., Ltd.
FX305: Lemon yellow available from Sinloihi Co., Ltd.
FX-327: Mazenta available from Sinloihi Co., Ltd.
GPX-17: Saturn yellow available from DayGlo Color Corp.
GPL-15: Blaze orange available from DayGlo Color Corp.
ZQ-14: Fire orange (fluorescent pigment having fluorescent dye dispersed and fixed in polyester resin) available from DayGlo Color Corp.
ZQ-17: Saturn yellow (fluorescent pigment having fluorescent dye dispersed and fixed in polyester resin) available from DayGlo Color Corp.
ZQ-18: Signal green (fluorescent pigment having fluorescent dye dispersed and fixed in polyester resin) available from DayGlo Color Corp.
FP113: Red available from Ukseung Chemical Co., Ltd.
FP1050: Blue available from Ukseung Chemical Co., Ltd.

(4) Preparation of paint composition

[Polyol composition No.1 (urethane polyol)]

Polyoxytetramethylene glycol (PTMG, number average molecular weight: 650) and trimethylolpropane (TMP) were dissolved in a mixed solvent (mass ratio of toluene/methyl ethyl ketone: 15/85). The molar ratio (PTMG:TMP) was 1.8:1.0. Dibutyltin dilaurate was added as a catalyst into the solution in an amount of 0.1 mass % with respect to the total amount of the base agent. While keeping the temperature of the polyol solution at a temperature of 80 °C, isophorone diisocyanate (IPDI) was added dropwise and mixed. The molar ratio (NCO/OH) of the mixed liquid was 0.6. After the dropwise addition of isophorone diisocyanate was finished, stirring was continued until the isocyanate component in the mixed liquid disappeared. Then, the mixed liquid was cooled to a normal temperature to prepare the polyol composition No.1 containing a urethane polyol as the base agent. In the polyol composition No.1, the amount of the solid component was 30 mass %, the amount of PTMG was 67 mass %, the hydroxy value of the solid component was 67.4 mgKOH/g, and the weight average molecular weight of the urethane polyol was 4867. In the case that the filler was added, the filler was added in the polyol composition. The amount of the filler was 45 parts by mass with respect to 100 parts by mass of the polyol composition constituting the paint film.

[Polyisocyanate composition No.1]

The isocyanurate-modified product of hexamethylene diisocyanate (trade name "Duranate TKA-100" available from Asahi Kasei Chemicals Corporation, NCO amount: 21.7 mass %) in an amount of 30 parts by mass, the biuret-modified product of hexamethylene diisocyanate (trade name "Duranate 21S-75E" available from Asahi Kasei Chemicals Corporation, NCO amount: 15.5 mass %) in an amount of 30 parts by mass, and the isocyanurate-modified product of isophorone diisocyanate (trade name "Desmodur Z4470" available from BAYER Corporation, NCO amount: 11.9 mass %) in an amount of 40 parts by mass were mixed. Methyl ethyl ketone, n-butyl acetate and toluene were added as a solvent in the above mixture and mixed to obtain the polyisocyanate composition No.1 as the curing agent. The concentration of the polyisocyanate component in the composition was 60 mass %.
The polyol composition and the polyisocyanate composition were mixed in the mixing ratio shown in Table 4 to prepare the paint compositions. The surface of the golf ball bodies obtained above was treated with sandblast and marked. The paint was applied with a spray gun, and dried for 24 hours in an oven at a temperature of 40 °C to obtain golf balls having a diameter of 42.7 mm and a mass of 45.3 g.

Table 4

| Paint composition No. | 1 | 2 |
|---|---|---|
| Polyol composition No. 1 | 100 | 100 |
| Polyisocyanate composition No. 1 | 29 | 29 |
| Silica (average particle size: 7 $\mu$m) | - | 45 |
| Formulation: parts by mass | | |

Silica: CARPLEX FPS-1 (wet silica, volume average particle size: 7.0 $\mu$m) available from Evonik Industries AG
The golf ball body was placed in a rotating member provided with a prong, the rotating member was allowed to rotate at 300 rpm, and application of the paint was conducted by spacing a spray distance (7 cm) between the air gun and the golf ball body while moving the air gun in an up and down direction. The painting interval in the overpainting operation was set to 1.0 second. Application of the paint was conducted under the air gun spraying conditions of overpainting: two times, a spraying air pressure: 0.15 MPa, a compressed air tank pressure: 0.10 MPa, a painting time for one application: 1 second, an atmosphere temperature: 20 °C to 27 °C, and an atmosphere humidity: 65 % or less. Evaluation results of the obtained golf balls are shown in Table 5.

Table 5-1

| Golf ball No. | 1 | 2 | 3 | 4 | 5 | 6 | 7 | 8 |
|---|---|---|---|---|---|---|---|---|
| Core diameter (mm) | 39.7 | 39.7 | 39.7 | 39.7 | 39.7 | 39.7 | 39.7 | 39.7 |
| Intermediate layer resin composition No. | 1 | 2 | 2 | 2 | 2 | 2 | 3 | 3 |
| Intermediate layer thickness (mm) | 1.0 | 1.0 | 1.0 | 1.0 | 1.0 | 1.0 | 1.0 | 1.0 |
| Cover composition for half shell A | 1 | 2 | 2 | 2 | 2 | 2 | 3 | 3 |
| Cover composition for half shell B | 2 | 3 | 4 | 5 | 6 | 7 | 2 | 8 |
| Cover thickness (mm) | 0.5 | 0.5 | 0.5 | 0.5 | 0.5 | 0.5 | 0.5 | 0.5 |
| Paint composition | 1 | 1 | 1 | 1 | 1 | 1 | 1 | 1 |
| Color of intermediate layer | White | Yellow | Yellow | Yellow | Yellow | Yellow | Orange | Orange |
| Color tone of intermediate layer L | 92 | 105 | 105 | 105 | 105 | 105 | 81 | 81 |
| a | -1 | -37 | -37 | -37 | -37 | -37 | 71 | 71 |
| b | -5 | 91 | 91 | 91 | 91 | 91 | 87 | 87 |
| Color of half shell A | White | Yellow | Yellow | Yellow | Yellow | Yellow | Orange | Orange |
| Color tone of first region of golf ball surface L | 92 | 104 | 104 | 104 | 104 | 104 | 78 | 78 |
| | 1 | -39 | -39 | -39 | -39 | -39 | 68 | 68 |
| | -15 | 103 | 103 | 103 | 103 | 103 | 69 | 69 |
| Color of half shell B | Yellow | Orange | Green | Red | Blue | Pink | Yellow | Yellow |
| Color tone of second region of golf ball surface L | 102 | 81 | 77 | 61 | 50 | 55 | 100 | 97 |

(continued)

| Golf ball No. | 1 | 2 | 3 | 4 | 5 | 6 | 7 | 8 |
|---|---|---|---|---|---|---|---|---|
| | -33 | 79 | -85 | 84 | -12 | 67 | -22 | -13 |
| | 87 | 88 | 35 | 48 | -46 | 14 | 101 | 92 |
| ΔEms1 | 10 | 12 | 12 | 12 | 12 | 12 | 18 | 18 |
| ΔEms2 | 98 | 118 | 79 | 136 | 149 | 139 | 96 | 85 |
| ΔEms2/ΔEms1 | 10.3 | 9.5 | 6.3 | 10.9 | 12.0 | 11.1 | 5.3 | 4.7 |
| ΔEs1s2 | 108 | 121 | 86 | 141 | 160 | 146 | 99 | 86 |
| Easiness of finding golf ball on the rough (m) | 7.6 | 6.9 | 6.7 | 7.2 | 7.1 | 7.4 | 6.6 | 6.4 |
| Orientation at shot | E | E | G | E | E | E | G | G |

Table 5-2

| Golf ball No. | 9 | 10 | 11 | 12 | 13 | 14 | 15 |
|---|---|---|---|---|---|---|---|
| Core diameter (mm) | 39.7 | 39.7 | 39.7 | 39.7 | 39.7 | 39.7 | 39.7 |
| Intermediate layer resin composition No. | 2 | 1 | 2 | 2 | 2 | 3 | 1 |
| Intermediate layer thickness (mm) | 1.0 | 1.0 | 1.0 | 1.0 | 1.0 | 1.0 | 1.0 |
| Cover composition for half shell A | 2 | 1 | 2 | 2 | 2 | 2 | 8 |
| Cover composition for half shell B | 1 | 3 | 5 | 6 | 8 | 1 | 2 |
| Cover thickness (mm) | 0.5 | 0.5 | 0.5 | 0.5 | 0.5 | 0.5 | 0.5 |
| Paint composition | 1 | 1 | 2 | 2 | 1 | 1 | 1 |
| Color of intermediate layer | Yellow | White | Yellow | Yellow | Yellow | Orange | White |
| Color tone of intermediate layer L | 105 | 92 | 105 | 105 | 105 | 81 | 92 |
| a | -37 | -1 | -37 | -37 | -37 | 71 | -1 |
| b | 91 | -5 | 91 | 91 | 91 | 87 | -5 |
| Color of half shell A | Yellow | White | Yellow | Yellow | Yellow | Yellow | Yellow |
| Color tone of first region of golf ball surface L | 104 | 92 | 108 | 108 | 104 | 100 | 99 |
| a | -39 | 1 | -37 | -37 | -39 | -22 | -25 |
| b | 103 | -15 | 105 | 105 | 103 | 101 | 83 |
| Color of half shell B | White | Orange | Red | Blue | Yellow | White | Yellow |
| Color tone of second region of golf ball surface L | 94 | 80 | 66 | 54 | 100 | 91 | 103 |
| a | -4 | 58 | 86 | -10 | -27 | 8 | -35 |
| b | 1 | 58 | 51 | -43 | 92 | -5 | 92 |
| ΔEms1 | 12 | 10 | 15 | 15 | 12 | 96 | 92 |
| ΔEms2 | 96 | 87 | 136 | 146 | 11 | 111 | 104 |
| ΔEms2/ΔEms1 | 7.7 | 9.2 | 9.0 | 9.7 | 0.9 | 1.2 | 1.1 |
| ΔEs1s2 | 108 | 93 | 141 | 160 | 16 | 110 | 14 |
| Easiness of finding golf ball on the rough (m) | 7.0 | 7.5 | 6.4 | 7.3 | 6.3 | 5.9 | 5.5 |
| Orientation at shot | G | E | G | E | P | F | P |

It is apparent from Table 5 that, the golf ball having a surface including a first region with a first color and a second region with a second color, and satisfying $\Delta$Ems2/$\Delta$Ems1$\geq$4.0 and $\Delta$Ems1$\leq$20 when a color difference between the surface of the outermost layer of the intermediate layer and the first region of the golf ball surface is represented by $\Delta$Ems1 and a color difference between the surface of the outermost layer of the intermediate layer and the second region of the golf ball surface is represented by $\Delta$Ems2, has high visibility and excellent orientation at shot.

This application is based on Japanese patent application No. 2020-182743 filed on October 30, 2020, the contents of which are hereby incorporated by reference

## Claims

1. A golf ball comprising a core, at least one intermediate layer covering the core, and a cover covering the intermediate layer, wherein

   the golf ball surface has a first region with a first color and a second region with a second color, and
   when a color difference between a surface of an outermost layer of the intermediate layer and the first region of the golf ball surface is represented by $\Delta$Ems1, and a color difference between the surface of the outermost layer of the intermediate layer and the second region of the golf ball surface is represented by $\Delta$Ems2, $\Delta$Ems2/$\Delta$Ems1$\geq$4.0 and $\Delta$Ems1$\leq$20 are satisfied.

2. The golf ball according to claim 1, wherein when a color difference between the first region of the golf ball surface and the second region of the golf ball surface is represented by $\Delta$Es1s2, $\Delta$Es1s2$\geq$50 is satisfied.

3. The golf ball according to claim 1 or 2, wherein the surface of the outermost layer of the intermediate layer has a color selected from the group consisting of white, yellow, orange, blue, red, pink, green, and black.

4. The golf ball according to any one of claims 1 to 3, wherein the first color and the second color are each a color selected from the group consisting of white, yellow, orange, blue, red, pink, green, and black.

5. The golf ball according to any one of claims 1 to 4, wherein the first region and the second region are each a region surrounded by two boundary lines connecting a first pole and a second pole of the golf ball surface wherein the region continues from the first pole to the second pole.

6. The golf ball according to any one of claims 1 to 5, wherein the first region and the second region are each hemispherical.

7. The golf ball according to any one of claims 1 to 6, wherein the golf ball further comprises a paint film covering the cover, and the paint film contains a resin component and a filler.

8. The golf ball according to any one of claims 1 to 6, wherein the golf ball further comprises a paint film covering the cover, and the paint film is a clear paint film.

9. The golf ball according to any one of claims 1 to 8, wherein the first region and the second region are each formed by a colored cover.

10. The golf ball according to any one of claims 1 to 8, wherein the first region and the second region are each formed by a colored paint film.

11. The golf ball according to any one of claims 1 to 8, wherein either one of the first region and the second region is formed by a colored cover, and the other one of the first region and the second region is formed by a colored paint film.

12. The golf ball according to claim 7, wherein an amount of the filler ranges from 3 parts by mass to 200 parts by mass with respect to 100 parts by mass of the resin component.

13. The golf ball according to any one of claims 1 to 12, wherein the intermediate layer and the cover are each formed from a composition containing a resin component, and a fluorescent dye and/or fluorescent pigment.

14. The golf ball according to claim 13, wherein the composition further contains an ultraviolet absorber or light stabilizer.

15. The golf ball according to any one of claims 1 to 14, wherein an area ratio of the first region to the second region ranges from 20/80 to 80/20.

**Fig. 1**

**Fig. 2**

**Fig. 3**

**Fig. 4**

**Fig. 5**

Europäisches
Patentamt

European
Patent Office

Office européen
des brevets

# EUROPEAN SEARCH REPORT

Application Number

EP 21 19 9866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/324323 A1 (YONTZ NICHOLAS [US]) 5 December 2013 (2013-12-05) * paragraph [0041] – paragraph [0131]; figures 1-24 * ----- | 1-15 | INV. A63B37/00 A63B43/00 |
| A | US 8 460 124 B2 (NAGASAWA HIROYUKI [JP]; MATSUDA SATOSHI [JP] ET AL.) 11 June 2013 (2013-06-11) * column 4, line 3 – column 15, line 20; figure 1 * ----- | 1-15 | |
| A | US 5 823 890 A (MARUKO TAKASHI [JP] ET AL) 20 October 1998 (1998-10-20) * column 2, line 16 – column 6, line 19; figure 1 * ----- | 1-15 | |

TECHNICAL FIELDS
SEARCHED     (IPC)

A63B

The present search report has been drawn up for all claims

| Place of search | Date of completion of the search | Examiner |
|---|---|---|
| Munich | 25 February 2022 | Jekabsons, Armands |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 9866

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2022

| Patent document cited in search report | | Publication date | Patent family member(s) | | Publication date |
|---|---|---|---|---|---|
| US 2013324323 | A1 | 05-12-2013 | NONE | | |
| US 8460124 | B2 | 11-06-2013 | JP | 5201360 B2 | 05-06-2013 |
| | | | JP | 2010246642 A | 04-11-2010 |
| | | | US | 2010261550 A1 | 14-10-2010 |
| US 5823890 | A | 20-10-1998 | JP | 3000918 B2 | 17-01-2000 |
| | | | JP | H09220299 A | 26-08-1997 |
| | | | US | 5823890 A | 20-10-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6338476 A
- JP 2013183833 A
- JP 2017118950 A
- JP S5964165 U
- US 7862760 B
- US 8915802 B
- US 9067105 B
- JP 2020182743 A